# DEMANDE DE BREVET EUROPEEN

(11) **EP 4 310 943 A1**
(43) Date de publication de la demande: **24.01.2024**
(21) Numéro de dépôt: 23187121.1
(22) Date de dépôt: 21.07.2023
(51) Int. Cl.: H01M 4/137, H01G 11/04, H01G 11/06, H01G 11/48, H01M 4/1399, H01M 4/60, H01M 4/62

(54) **ELECTRODE DE REFERENCE A BASE DE MATERIAU ORGANIQUE DE TYPE N**

(30) Priorité: 22.07.2022 FR 2207522
(71) Demandeur: Commissariat à l'énergie atomique et aux énergies alternatives, 75015 Paris (FR)
(72) Inventeur: YVENAT, Marie-Eve, 38054 Grenoble Cedex 09 (FR); CHAVILLON, Benoit, 38054 Grenoble Cedex 09 (FR); GUTEL, Thibaut, 38054 Grenoble Cedex 09 (FR); TOMASI, Daniel, 38054 Grenoble Cedex 09 (FR)
(74) Mandataire: Cabinet Nony

(57) **Abrégé**

La présente invention concerne l'utilisation, à titre d'électrode de référence dans une cellule d'un système de stockage électrochimique, d'une électrode à base d'un ou plusieurs matériaux organiques électro-actifs de type N, dont la réaction rédox associée présente un potentiel électrochimique constant ; le ou lesdits matériaux organiques de type N étant présents sous une forme partiellement réduite chargée négativement, avec une compensation de charge par au moins un cation.

Elle concerne également une cellule d'un système de stockage électrochimique, en particulier d'une batterie métal-ion, batterie lithium-soufre ou lithium-air ; ou d'un supercondensateur, en particulier d'un supercondensateur hybride au potassium, comportant trois électrodes : une électrode positive, une électrode négative et une telle électrode de référence.

## Description

### Domaine technique

La présente invention concerne le domaine des systèmes de stockage électrochimique, plus précisément le domaine des dispositifs électrochimiques de type accumulateurs ou batteries métal-ion, notamment des batteries sodium-ion, lithium-ion, potassium-ion, magnésium-ion ; des batteries lithium-soufre ou lithium-air ; et supercondensateurs, par exemple des supercondensateurs hybrides au potassium.

Elle vise plus précisément la mise en oeuvre d'une électrode à base d'un ou plusieurs matériaux actifs organiques de type accepteurs d'électrons, dits encore de type N, présents sous une forme partiellement réduite chargée négativement, avec compensation des charges négatives par au moins un cation, comme électrode de référence dans une cellule dudit système de stockage électrochimique.

### Technique antérieure

Les dispositifs électrochimiques de type batteries, par exemple batteries au lithium, et supercondensateurs, trouvent de multiples applications, notamment dans l'alimentation des systèmes embarqués de faible épaisseur, comme les cartes de crédit, les étiquettes intelligentes, dans l'alimentation des téléphones mobiles, le stockage de l'énergie de cellules photovoltaïques, ou encore dans l'alimentation des véhicules électriques.

Divers systèmes de stockage électrochimiques ou générateurs électrochimiques ont été développés, telles que des batteries métal-ion, notamment des batteries sodium-ion, lithium-ion, potassium-ion, magnésium-ion ; des batteries lithium-soufre ou lithium-air, et plus récemment des supercondensateurs.

Ces générateurs électrochimiques, par exemple au lithium, fonctionnent classiquement sur le principe d'insertion et désinsertion (ou intercalation-désintercalation) d'un métal, tel que le lithium, sur au moins une électrode. En particulier, dans un accumulateur lithium-ion, les cations Li⁺ font ainsi des allers-retours entre les électrodes, respectivement positive et négative, à chaque charge et décharge de l'accumulateur. Le matériau actif de l'électrode positive est capable de libérer des ions lithium au moment de la charge et d'incorporer des ions lithium au moment de la décharge.

Les supercondensateurs constituent des dispositifs de stockage d'énergie permettant d'obtenir une densité de puissance et une densité d'énergie intermédiaires entre celles fournies par des batteries électrochimiques et par des condensateurs électrolytiques classiques. En outre, ils restituent plus rapidement de l'énergie qu'une batterie électrochimique. Dans les supercondensateurs standards, dits encore « symétriques », les deux électrodes (électrode positive et électrode négative) sont toutes deux à base de carbone activé et l'électrolyte est classiquement à base de sel d'ammonium, typiquement du tétrafluoroborate de tétraéthylammonium (Et₄NBF₄) dans l'acétonitrile ou dans du carbonate de propylène. Il a également été développé des supercondensateurs, dits « hybrides » ou « asymétriques », se situant entre les supercondensateurs symétriques classiquement utilisés à base de carbone activé et les batteries. Une des électrodes, classiquement l'électrode positive, est à base de carbone activé ; l'autre électrode, classiquement l'électrode négative, étant constituée à partir d'un matériau de batterie rechargeable. Le stockage de charges dans un supercondensateur hybride se produit au niveau de l'électrode négative par le biais d'une réaction redox, tandis que le stockage de charges au niveau de l'électrode positive se produit par le biais de la formation d'une double-couche électrochimique.

Il est important, pour les systèmes de stockage électrochimiques, qu'il s'agisse des batteries ou des supercondensateurs, de pouvoir connaître et suivre l'évolution du potentiel de chaque électrode, lors du fonctionnement de la cellule électrochimique. En particulier, pour des cellules mettant en oeuvre des électrolytes à base de solvant(s) organique(s), il importe que la cellule du système électrochimique ne fonctionne pas en dehors de la plage de stabilité électrochimique du ou desdits solvants organiques, pour ne pas engendrer de dégradations et notamment la production de gaz. De même, il est important de contrôler, via la limitation en potentiel, l'état de lithiation de certains composés tels que les oxydes lamellaires LiₓMO₂ dont la structure est instable pour x<0,5 (cas du LiCoO₂) ou x<0,2 (LiₓMO₂ avec M=Ni, Co, Mn à faible teneur en Co), ou encore éviter l'électrodépôt de lithium à l'état métallique à l'électrode négative à des potentiels inférieurs à 0V *vs* Li⁺/Li. Afin de contrer l'apparition de tout phénomène indésirable, il importe de pouvoir connaître et suivre l'évolution du potentiel de chaque électrode, lors du fonctionnement de la cellule électrochimique.

Pour cela, il est souhaitable de pouvoir introduire une électrode dite de référence au sein du système électrochimique. Une électrode de référence doit présenter un potentiel stable et connu, permettant de connaître à chaque instant le potentiel de chacune des électrodes positive et négative du système.

La réalisation de systèmes à trois électrodes, notamment pour des cellules de format « pouch cell », a déjà été décrite dans le cadre de batteries métal-ion dans le document US 9,379,418. Les électrodes de référence proposées jusqu'à présent dans les systèmes de stockage électrochimiques, par exemple dans des batteries métal-ion, telles que des batteries lithium-ion, exemple dans les documents Cengiz et al., J. Electrochem. Soc. 2021 [1], US 2009/0104510 ou US 9,379,418 ; reposent sur des alliages à base de lithium (par exemple, LiₓSn, LiₓBi, LiₓAu, LiₓIn, LiₓSi, LiₓAl, etc.), respectivement à base de sodium, de potassium, etc ; des matériaux d'intercalation de LiMO₂ avec M représentant Co, Ni ou Mn ; ou LiM'₂O4 avec M' représentant Ni ou Mn ; ou encore des matériaux d'insertion tels que le LiM"PO₄ avec M" représentant Fe, Co, Mn ou Ni ; ou de type Li₄Ti₅O₁₂.

Dans le domaine des supercondensateurs, on peut également citer le document US 2011/0043968 qui propose, pour évaluer les caractéristiques électrochimiques de systèmes de supercondensateurs standards et hybrides au lithium, d'utiliser une électrode de référence au calomel saturé (ECS). L'utilisation d'une telle électrode de référence n'est toutefois pas compatible avec le conditionnement souhaité des cellules dans un format prismatique, en particulier de type « pouch cell ».

### Exposé de l'invention

La présente invention vise précisément à proposer des électrodes utiles comme électrodes de référence dans des cellules de systèmes de stockage ou générateurs électrochimiques, tels que des batteries métal-ion, des batteries lithium-soufre, des batteries lithium-air ou encore des supercondensateurs.

Les inventeurs ont ainsi découvert qu'il est possible de mettre en oeuvre une électrode formée à partir d'une électrode à base de matériau(x) électro-actif(s) organique(s) de type N et dont la réaction rédox associée présente un potentiel électrochimique constant.

Plus particulièrement, l'invention concerne, selon un premier de ses aspects, l'utilisation, à titre d'électrode de référence dans une cellule d'un système de stockage électrochimique, d'une électrode à base d'un ou plusieurs matériaux organiques électro-actifs de type N, dont la réaction rédox associée présente un potentiel électrochimique constant ; le ou lesdits matériaux organiques de type N étant présents sous une forme partiellement réduite chargée négativement, avec une compensation de charge par au moins un cation.

Une électrode de référence telle que définie ci-dessus, à base du ou desdits matériaux organiques de type N à l'état partiellement réduit, chargé négativement, avec insertions de cations, est désignée plus simplement dans la suite du texte sous l'appellation « électrode de référence selon l'invention ».

Les matériaux de type N considérés selon l'invention peuvent être plus particulièrement choisis parmi des composés, en particulier des molécules, oligomères ou polymères, porteurs de fonctions rédox choisies parmi :
- des fonctions azoïques conjuguées (-N=N-) tel que l'azobenzène ou l'un de ses dérivés,
- des fonctions disulfures (-S-S-) tels que les diphényldisulfures, le tétrathionapthtalène, le poly(2,5-dimercapto-1,3,4-thiadiazole), le poly(5,8-dihydro-1H,4H-2,3,6,7-tétrathia-anthracène) ; et
- des fonctions carbonyles conjuguées, en particulier contenues au sein de structures quinonoïdes, comme par exemple l'anthraquinone ; de structures anhydrides comme par exemple l'anhydride pyromellitique, de structures dimides comme par exemple le dimide du pérylène ; ou de structures carboxylates comme par exemple le tétracarboxylate de pérylène. Comme décrit dans la suite du texte, l'électrode de référence mise en oeuvre selon l'invention peut être par exemple à base du tétracarboxylate de pérylène, également noté PTCLi₄.

Des matériaux électroactifs organiques de type N [2] ont déjà été proposés pour leur mise en oeuvre comme matériaux actifs d'électrodes organiques dans des systèmes de stockage électrochimique. Par exemple, la publication [3] présente une étude approfondie du PTCLi₄ et propose la préparation d'électrodes composites aux performances électrochimiques optimisées en combinant le PTCLi₄ avec des nanotubes de carbone et des liants dépourvus de fluor.

En revanche, à la connaissance des inventeurs, il n'a jamais été proposé de former une électrode de référence à partir de ces électrodes organiques.

Comme évoqué précédemment, une électrode de référence est définie comme étant une électrode possédant un potentiel électrochimique stable et connu, permettant avantageusement de servir de point de référence pour mesurer indépendamment le potentiel des électrodes positive et négative dans une cellule électrochimique.

Comme détaillé dans la suite du texte, une électrode de référence selon l'invention peut être obtenue, préalablement à son utilisation dans ladite cellule du système de stockage électrochimique ou générateur électrochimique, à partir d'une électrode à base du ou desdits matériaux organiques de type N, par réduction partielle du ou desdits matériaux organiques de type N avec une compensation des charges négatives crées lors de l'oxydation par insertion de cations, permettant d'obtenir le potentiel électrochimique constant (autrement dit, le plateau de potentiel).

L'électrode de référence peut être mise en oeuvre pour divers systèmes de stockage électrochimique ou générateurs électrochimiques, et notamment pour des batteries métal-ion, notamment des batteries sodium-ion, lithium-ion, potassium-ion, magnésium-ion ; des batteries lithium-soufre ou lithium-air ; et supercondensateurs.

L'invention concerne encore, selon un autre de ses aspects, une cellule d'un système de stockage électrochimique ou générateur électrochimique, comportant trois électrodes :
- une électrode positive ;
- une électrode négative ; et
- une électrode de référence selon l'invention.

Ainsi, l'invention met en oeuvre un système à trois électrodes, les électrodes positive et négative de la cellule du système de stockage électrochimique et, en outre, une électrode de référence selon l'invention à base de matériau(x) organique(s) de type N.

A titre d'exemple, comme illustré dans les exemples qui suivent, l'électrode de référence peut être mise en oeuvre dans une cellule d'une batterie lithium-ion.

L'invention concerne encore un système de stockage électrochimique ou générateur électrochimique, par exemple de type batterie métal-ion, batterie lithium-soufre ou lithium-air, ou supercondensateur, comprenant au moins une cellule telle que définie précédemment, intégrant une électrode de référence à base de matériau(x) organique(s) de type N.

De manière avantageuse, une électrode de référence selon l'invention est compatible avec le conditionnement des cellules dans tout format souhaité, en particulier dans un format prismatique, avantageusement sous la forme d'une cellule type sachet souple, plus connue sous l'appellation en anglais « pouch cell », comme illustré dans les exemples qui suivent. L'intégration d'une électrode de référence selon l'invention au sein d'au moins l'une des cellules d'un système de stockage électrochimique ou générateur électrochimique, permet avantageusement d'accéder aux potentiels de chacune des électrodes positive et négative. La connaissance et le suivi des potentiels des électrodes positive et négative permet de pouvoir détecter le cas échéant des défauts potentiels à leur fonctionnement.

Ainsi, l'invention concerne, selon un autre de ses aspects, l'utilisation d'une électrode de référence à base de matériau(x) organique(s) de type N telle que définie précédemment, dans une cellule d'un système de stockage électrochimique ou générateur électrochimique, pour connaître les potentiels d'au moins l'une des électrodes positive et négative, de préférence de chacune des électrodes positive et négative, en particulier pour suivre l'évolution des potentiels d'au moins l'une des électrodes positive et négative, au cours du fonctionnement dudit système.

Une surveillance des potentiels des électrodes positive et négative au cours du fonctionnement du système de stockage électrochimique, par l'intermédiaire de l'électrode de référence selon l'invention, permet avantageusement une utilisation optimisée dudit système électrochimique, en particulier une utilisation à sa capacité maximale, sans pour autant s'exposer à des risques de dysfonctionnement, et permet ainsi une sûreté améliorée à l'usage dudit système électrochimique.

D'autres caractéristiques, variantes et avantages d'une électrode de référence selon l'invention et de sa mise en oeuvre au niveau d'une cellule d'un système de stockage électrochimique selon l'invention, ressortiront mieux à la lecture de la description, des exemples et figures qui vont suivre, donnés à titre illustratif et non limitatif de l'invention.

### Brève description des dessins

[Fig 1] présente, de manière schématique, en coupe transversale, un exemple d'assemblage 100 des différents éléments, y compris l'électrode de référence selon l'invention, au sein d'une cellule d'un système de stockage électrochimique selon l'invention ;
[Fig 2] présente le profil de cyclage galvanostatique à C/10 d'une électrode à base de PTCLi₄ dans le cas d'une demi-pile au lithium ;
[Fig 3] présente, de manière schématique, la cellule lithium-ion, au format pouch-cell, comme préparé en exemple 1, comprenant une électrode positive, l'électrode de référence selon l'invention et une électrode négative, les électrodes étant séparées par des membranes poreuses en polypropylène, et imprégnée par l'électrolyte ;
[Fig 4] présente, de manière schématique, l'évolution du potentiel électrochimique E en fonction de la capacité spécifique massique lors de la lithiation (réduction) partielle de l'électrode à base de PTCLi₄ pour former l'électrode de référence en exemple 1 (évolution du potentiel E en fonction de la capacité absolue (figure 4(a)) et de la capacité spécifique massique (figure 4(b)) ;
[Fig 5] présente l'évolution de la tension de cellule de batterie lithium-ion et des potentiels des électrodes positive et négative, obtenus à l'aide de l'électrode de référence, comme décrit en exemple 2.

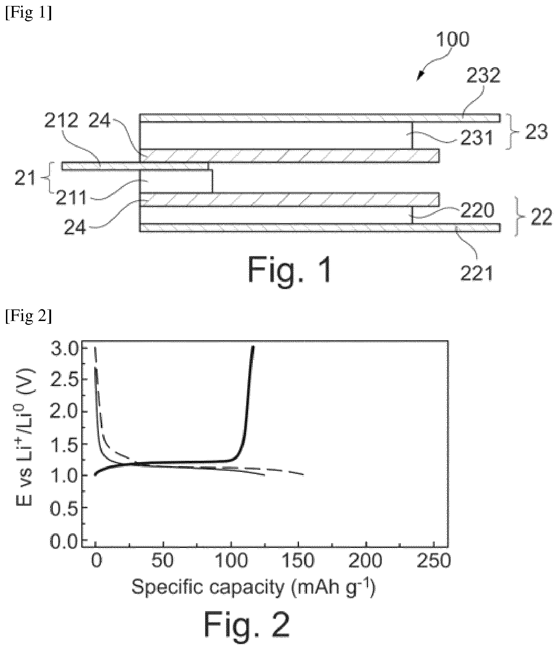

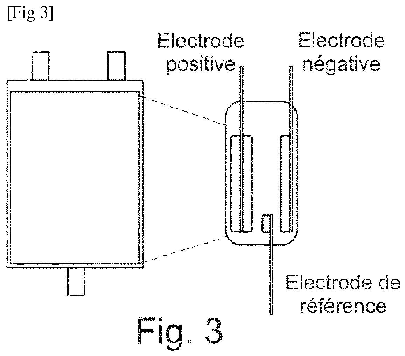

Il convient de noter que, pour des raisons de clarté, les différents éléments sur les figures 1 et 3 sont représentés en échelle libre, les dimensions réelles des différentes parties n'étant pas respectées.

Dans la suite du texte, les expressions « compris entre ... et ... », « allant de ... à ... » et « variant de ... à ... » sont équivalentes et entendent signifier que les bornes sont incluses, sauf mention contraire.

### Description détaillée

### ELECTRODE DE REFERENCE

Comme indiqué précédemment, l'invention met en oeuvre une électrode de référence préparée à partir d'une électrode à base d'un ou plusieurs matériaux organiques électro-actifs de type N dont la réaction rédox associée présente un potentiel électrochimique constant. Par matériau, dit encore composé, « organique », on entend un composé, en particulier de nature moléculaire, oligomérique ou polymérique, de la chimie du carbone, comportant des atomes de carbone et d'hydrogène, et un ou plusieurs hétéroatomes choisis parmi l'oxygène, l'azote, le soufre, le phosphore, ces atomes et hétéroatomes étant uniquement liés par des liaisons covalentes, ce composé pouvant être sous forme d'un sel, par exemple un sel métallique.

Par matériau électro-actif « de type N » ou « accepteur d'électrons », on entend désigner un matériau organique pouvant subir, du fait de la nature de ses fonctions électroactives, une réduction réversible de l'état neutre vers un état chargé négativement, avec une compensation de charge cationique.

Les matériaux de type N ont donc pour mécanisme l'insertion de cations lors de leur réduction.

Le mécanisme électrochimique associé à un matériau de type N peut être schématisé comme suit :

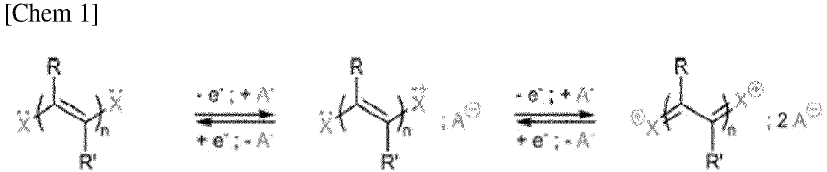

La réaction électrochimique d'oxydo-réduction, dite également réaction rédox, associée au passage réversible de l'état oxydé dudit matériau organique de type N mis en oeuvre selon l'invention à un état réduit, chargé négativement, a la particularité de présenter un potentiel électrochimique constant. En particulier, le matériau organique électroactif de type N de l'électrode présente un potentiel constant sur une majeure partie de la plage de fonctionnement en capacité.

Comme décrit dans les exemples, le potentiel électrochimique constant, associé à un matériau actif de type N, peut être identifié par un test en cyclage de l'électrode à base dudit matériau organique de type N assemblée en demi-cellule ou cellule complète, par exemple sous forme de pile-bouton, en opérant une charge ou une décharge en mode galvanostatique. Le potentiel électrochimique constant correspond au plateau de potentiel observé au niveau des courbes de charge/décharge à courant constant (par exemple, courbes de variation du potentiel E en fonction du temps ou en fonction de la capacité absolue ou spécifique massique lors d'un cyclage en mode galvanostatique). A noter qu'en cellule complète (c'est toujours le cas en demi-cellule avec une contre-électrode de lithium), ce plateau de potentiel n'est observable que si la contre-électrode utilisée (qui joue alors le rôle de référence) présente également un plateau de potentiel lors de sa charge/décharge à courant constant. Comme illustré dans la suite du texte, la valeur du plateau de potentiel associé à l'électrode de référence dépend de la nature du ou desdits matériaux organiques de type N mis en oeuvre, et notamment du type de fonctionnalité rédox du matériau organique de type N mis en oeuvre.

Comme détaillé dans la suite du texte, une électrode de référence selon l'invention peut être obtenue, préalablement à son utilisation, à partir d'une électrode à base d'au moins un matériau organique de type N, par réduction partielle du ou desdits matériaux organiques de type N avec une compensation des charges négatives crées lors de la réduction par insertion de cations.

### Electrode à base de matériau(x) organique(s) de type N

Comme indiqué précédemment, un matériau organique de type N comporte des fonctions (motifs ou fragment) actives électrochimiquement ou fonction rédox, pouvant passer d'une forme oxydée, neutre, à une forme réduite chargée négativement, la charge négative étant compensée par au moins un cation.

Le matériau organique de type N selon l'invention peut être choisi parmi les matériaux organiques, molécules, oligomères ou polymères organiques, déjà proposés comme matériaux actifs d'électrodes organiques, par exemple pour des batteries. De tels matériaux sont documentés dans la littérature [2].

En particulier, le ou lesdits matériaux organiques de type N selon l'invention peuvent être choisis parmi des composés, en particulier des molécules, oligomères ou polymères, porteurs de fonctions rédox choisies parmi :
- des fonctions azoïques conjuguées (-N=N-) tel que l'azobenzène ou l'un de ses dérivés,
- des fonctions disulfures (-S-S-) tels que les diphényldisulfures, le tétrathionapthtalène, le poly(2,5-dimercapto-1,3,4-thiadiazole), le poly(5,8-dihydro-1H,4H-2,3,6,7-tétrathia-anthracène) ; et
- des fonctions carbonyles conjuguées, en particulier contenues au sein de structures quinonoïdes, comme par exemple l'anthraquinone ; de structures anhydrides comme par exemple l'anhydride pyromellitique, de structures dimides comme par exemple le dimide du pérylène ; ou de structures carboxylates comme par exemple le tétracarboxylate de pérylène.

Il est entendu que l'électrode de référence peut être à base d'un unique matériau organique de type N ou d'un mélange d'au moins deux matériaux organiques de type N, en particulier choisis parmi les composés décrits précédemment.

Le composé organique de type N peut notamment se présenter sous la forme d'une molécule, d'un oligomère ou d'un polymère. Selon un mode de réalisation particulier, il se présente sous la forme d'un polymère, en particulier présentant des motifs rédox tels que listés précédemment, et plus particulièrement dont au moins l'un des motifs répétitifs est porteur de groupements présentant au moins un motif rédox tel que cité précédemment.

Par « polymère », on entend désigner à la fois les homopolymères et copolymères. Avantageusement, le matériau organique rédox de type N est sous la forme d'un polymère réticulé. Par « polymère réticulé », on entend désigner au sens de l'invention des polymères résultant de l'utilisation, lors de la polymérisation, d'un agent réticulant ou ramifiant, c'est-à-dire présentant plusieurs fonctions polymérisables, de préférence bi- ou tri-fonctionnalisées.

Ces matériaux organiques rédox peuvent être préparés selon des méthodes conventionnelles connues de l'homme du métier.

Des exemples de composés organiques de type N sont décrits plus précisément ci-dessous.

### Composés porteurs de fonctions azoïques conjuguées

Selon un mode de réalisation particulier, le matériau organique de type N peut être choisi parmi des composés porteurs d'une ou plusieurs fonctions azoïques (-N=N-).

Le mécanisme redox associé à une fonction azoïque peut être schématisé comme suit :

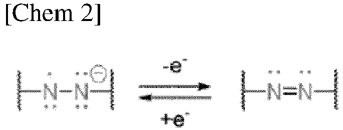

D'une manière générale, la réaction redox, associée au passage de la fonction azoïque de sa forme neutre, à sa forme réduite chargée négativement avec compensation de charge cationique présente un potentiel constant compris entre 0,5 et 2 V vs Li⁺/Li.

Le composé porteur d'une ou plusieurs fonctions azoïques peut être par exemple l'azobenzène ou l'un de ses dérivés. Il peut être de structure générale suivante, sous sa forme neutre, non oxydée : 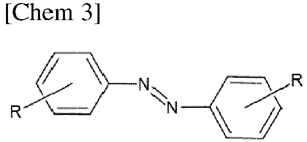 avec R, identiques ou différents, de préférence identiques, étant choisis, par exemple, parmi un atome d'hydrogène, une chaîne alkyle fonctionnalisée ou non, des fonctions carboxylate, sulfonate, phosphonate et alcoolate.

A titre d'exemple, on peut citer l'azobenzène 4,4-dicarboxylate de lithium (ADALS).

### Composés porteurs de fonctions disulfures

Selon un mode de réalisation particulier, le matériau organique de type N peut être choisi parmi des composés porteurs d'une ou plusieurs fonctions disulfures (-S-S-).

Le mécanisme redox associé à une fonction disulfure peut être schématisé comme suit :

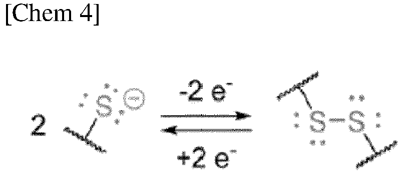

D'une manière générale, la réaction redox, associée au passage de la fonction disulfure de sa forme neutre à sa forme réduite chargée négativement (deux groupes -S⁻) avec compensation de charge cationique présente un potentiel constant compris entre 1,5 et 3 V vs Li⁺/Li.

Le composé porteur d'une ou plusieurs fonctions disulfures peut être par exemple choisi parmi les diphényldisulfures, le tétrathionapthtalène, le poly(2,5-dimercapto-1,3,4-thiadiazole), le poly(5,8-dihydro-1H,4H-2,3,6,7-tétrathia-anthracène).

### Composés porteurs de fonctions carbonyles conjuguées

Selon un mode de réalisation particulier, le matériau organique de type N peut être choisi parmi des composés porteurs d'une ou plusieurs fonctions carbonyles conjuguées, en particulier contenue(s) au sein de structures quinonoïdes, comme par exemple l'anthraquinone ; de structures anhydrides (-C(O)-O-C(O)-) comme par exemple l'anhydride pyromellitique, dimides (-C(O)-N-C(O)-) comme par exemple le dimide du pérylène ; ou carboxylates (R-COOX) comme par exemple le tétracarboxylate de pérylène. Le mécanisme redox associé à une fonction carbonyle peut être schématisé comme suit :

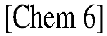

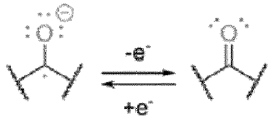

D'une manière générale, la réaction redox, associée au passage de la fonction carbonyle de sa forme neutre, à sa forme réduite chargée négativement avec compensation de charge cationique présente un potentiel constant compris, dans le cas d'une structure de type quinonoïde entre 1,5 et 3,5 V vs Li⁺/Li ; dans le cas d'une structure de type anhydride entre 1,5 et 3,5 V vs Li⁺/Li ; dans le cas d'une structure de type dimide entre 1,5 et 3,5 V vs Li⁺/Li ; et dans le cas d'une structure carboxylate, entre 0,5 et 1,5 V vs Li⁺/Li.

Dans un mode de réalisation particulier, le matériau organique de type N peut être choisi parmi les composés, notamment molécules, oligomères ou polymères, quinonoïdes, notamment choisis parmi les composés benzoquinones, les composés napthoquinones et les composés anthraquinones.

A titre d'exemples de composés benzoquinones, on peut citer les composés 1,4-benzoquinone ; 1,2-benzoquinone, substitués ou non ; et les polymères qui en dérivent, par exemple le poly(benzoquinolyl sulfide).

A titre d'exemples de composés naphtoquinones, on peut citer les composés 1,4-naphtoquinone ; 1,2-napthtoquinone 1,5-naphtoquinone ; 1,7-naphtoquinone ; 2,3-naphtoquinone ; 2,6-naphtoquinone substitués ou non ; et les polymères qui en dérivent.

A titre d'exemples de composés anthraquinones, on peut citer les composés 9,10-anthraquinone ; 1,2-anthraquinone, 1,4-anthraquinone ; 1,10-anthraquinone ; 2,9-anthraquinone ; 1,5-anthraquinone ; 1,7-anthraquinone ; 2,3-anthraquinone ; 2,6-anthraquinone, substitués ou non ; et les polymères qui en dérivent.

Le ou les substituants éventuellement portés par les structures benzoquinone, naphtoquinone et anthraquinone substituées peuvent être choisis parmi un atome d'hydrogène, une chaîne alkyle fonctionnalisée ou non, des fonctions carboxylate, sulfonate, phosphonate et alcoolate.

Dans un mode de réalisation particulier, le matériau organique de type N peut être choisi parmi des composés, notamment moléculaires, oligomères ou polymères, comprenant un ou plusieurs groupes carboxylates, en particulier carboxylates lithiés.

A titre d'exemples de composés carboxylates, en particulier lithiés, peuvent être cités le téréphtalate de dilithium, le carboxylate de naphtalène lithié, le carboxylate de pérylène lithié, ou encore des oligomères ou polymères fonctionnalisés par des groupements carboxylates, tel que le polythiophène téréphtalate.

Le matériau organique de type N peut encore être choisi parmi les composés, notamment moléculaires, oligomères ou polymères, comprenant une ou plusieurs fonctions anhydrides, par exemple le dianhydride pyromelllitique.

Il peut encore être choisi parmi les composés, notamment moléculaires, oligomères ou polymères, comprenant des fonctions carbonyles conjuguées dans des structures de type diimide, par exemple le pérylène diimide ou le naphthalène diimide.

Dans un mode de réalisation particulier, le matériau organique de type N est un composé comprenant une ou plusieurs fonctions carboxylates lithiés, en particulier le tétracarboxylate de pérylène lithié (PTCLi₄), dont la structure est rappelée ci-dessous :

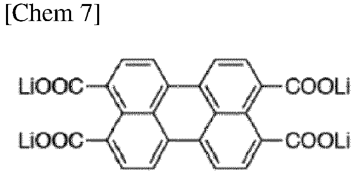

Il relève des connaissances de l'homme du métier d'ajuster la forme sous laquelle se présente le matériau organique de type N afin d'assurer que le matériau de l'électrode de référence, lors de son utilisation au niveau de la cellule du système de stockage électrochimique, ne se dégrade pas, en particulier ne se dissolve pas dans l'électrolyte de la cellule électrochimique dans laquelle il est mis en oeuvre.

Plusieurs stratégies sont connues pour insolubiliser les composés organiques rédox. Comme vu précédemment, l'une des stratégies les plus couramment utilisées consiste à préparer le composé organique rédox sous la forme de polymères ou copolymères, réticulés ou non, avec des fonctions rédox pendantes ou intramoléculaires.

Une autre stratégie pour insolubiliser les composés organiques électroactifs consiste à réaliser des structures composites par physisorption, avec un substrat inorganique, par exemple en silice, alumine, carbone, au sein desquelles se créent des liaisons faibles (hydrogène, interactions π- π, Van der Waals), permettant de limiter, voire d'empêcher la dissolution du composé organique rédox.

Il est également possible d'effectuer un greffage du composé organique électroactif sur un solide inorganique (silice, alumine, carbone, etc.) *via* des liaisons ioniques ou covalentes, par exemple par réaction acido-basique avec les hydroxyles de la surface de la silice ou par réaction de sels de diazonium, avec la surface du carbone, afin de former un composé hybride organique/inorganique insoluble.

Une autre stratégie consiste encore à ajouter des fonctions ioniques sur le composé organique électroactif, par exemple de type carboxylate, sulfonate, alcoolate, imidure, énolate, etc., permettant de limiter la dissolution du composé en milieu organique.

Ainsi, une électrode à base d'un ou plusieurs matériaux organiques de type N considérée selon l'invention s'entend d'une électrode comprenant un ou plusieurs composés organiques de type N, porteurs de motifs rédox tels que considérés ci-dessus, le ou lesdits composés pouvant se présenter sous différentes formes, telles que considérées ci-dessus, par exemple sous forme associée à d'autres matériaux au sein de composites, pour autant qu'elles autorisent la réaction électrochimique associée audit matériau organique de type N, en particulier sa réduction avec compensation de charges cationiques.

### Préparation de l'électrode à base du matériau(x) organique(s) de type N

L'électrode à base du ou desdits matériaux électro-actifs organiques de type N, à partir de laquelle est obtenue une électrode de référence selon l'invention, peut être préparée par tout méthode connue de l'homme du métier.

L'électrode peut être composée typiquement d'une couche comprenant un mélange du ou desdits matériaux électro-actifs organiques de type N, d'un ou plusieurs liants et éventuellement d'un ou plusieurs additifs conducteurs électroniques, en surface d'un collecteur de courant.

La préparation de ladite électrode peut comprendre, d'une manière générale, au moins les étapes suivantes :
- préparation d'une dispersion, plus couramment appelée encre, comprenant, dans un ou plusieurs solvants aqueux et/ou organiques, au moins ledit matériau organique de type N, en particulier tel que décrit précédemment ; un ou plusieurs additifs conducteurs électroniques, et éventuellement un ou plusieurs liants ;
- dépôt de l'encre à la surface d'un collecteur de courant ; et
- évaporation du ou desdits solvant(s) de l'encre pour former le film d'électrode.

Le solvant de l'encre peut comprendre de l'eau et/ou un ou plusieurs solvants organiques, par exemple choisi parmi la N-méthyl-2-pyrrolidone (NMP), le tétrahydrofurane (THF), l'acétone, le N,N-diméthylformamide (DMF), l'acétonitrile et l'éthanol.

Les additifs conducteurs électroniques sont mis en oeuvre pour améliorer la conductivité électronique de l'électrode. Ils peuvent être choisis par exemple parmi des fibres de carbone, du noir de carbone, des nanotubes de carbone et leurs mélanges.

Le ou lesdits additifs conducteurs électroniques, lorsqu'ils sont présents, peuvent être mis en oeuvre de préférence en une teneur allant de 0,5 à 50 % massique, en particulier de 1 à 20 % massique, par rapport à la masse l'électrode. Il est entendu que la masse totale de l'électrode n'inclut pas la masse du collecteur de courant.

Les liants sont mis en oeuvre pour assurer la tenue mécanique de l'électrode sur le collecteur de courant, la cohésion des différents composants de l'électrode ou encore ses propriétés de flexibilité. Ils peuvent être choisis parmi des liants polymères, en particulier choisis parmi les polymères fluorés, par exemple parmi le polytétrafluoroéthylène (PTFE), le polyfluorure de vinylidène (PVDF), les polymères dérivés de carboxyméthylcellulose, les polysaccharides et les latex notamment de type caoutchouc styrène-butadiène (BR ou en langue anglaise « stryrene-butadiene rubber »).

A titre d'exemple, le liant est la carboxyméthylcellulose.

Le ou lesdits liants peuvent être présents en une quantité inférieure ou égale à 20 % massique, par rapport à la masse totale de l'électrode, en particulier inférieure ou égale à 5 % massique, notamment comprise entre 1 et 3 % massique, par rapport à la masse totale de l'électrode. Il est entendu que la masse totale de l'électrode n'inclut pas la masse du collecteur de courant.

L'encre peut être homogénéisée avant son étalement.

Le dépôt de l'encre à la surface du collecteur de courant peut être opéré par toute technique connue de l'homme du métier, par exemple par enduction, par une technique d'impression, par extrusion ou par colaminage.

Le collecteur de courant peut être plein, par exemple sous la forme d'un feuillard ou sous la forme d'une grille.

Le collecteur de courant peut être en un matériau métallique choisi parmi le cuivre, l'aluminium, le nickel ou l'inox potentiellement revêtu de carbone.

L'évaporation du ou des solvants de l'encre peut être opérée par séchage, par exemple à l'étuve, à une température comprise entre 20°C et 150 °C, notamment entre 50 °C et 80°C, en particulier pendant une durée comprise entre 1 et 15 heures.

Le ou lesdits matériau(x) organique(s) de type N peu(ven)t représenter de 50 à 98 % massique, en particulier de 70 à 95 % massique, par rapport à la masse totale de l'électrode, exclusion faite de la masse du collecteur de courant.

De préférence, le grammage de l'électrode (défini comme la masse de matériau organique de type N en grammes par unité de surface en cm²) est compris entre 0,1 mg/cm² et 50 mg/cm², en particulier entre 1 mg/cm² et 20 mg/cm². Le grammage de l'électrode en matériau organique de type N, autrement dit la masse de matériau organique de type N par unité de surface, peut être ajusté en contrôlant le taux de matériau organique de type N et l'épaisseur de dépôt, notamment d'enduction, de l'encre formulée sur le collecteur de courant.

### Obtention de l'électrode de référence

Comme indiqué précédemment, on accède à l'électrode de référence en procédant à une réduction partielle du ou desdits matériaux organiques de type N, de sorte à atteindre le potentiel électrochimique constant associé à la réaction rédox.

La réduction partielle ou desdits matériaux organiques de type N fait plus particulièrement intervenir une compensation des charges négatives créées lors de la réduction par insertions de cations.

Plus précisément, l'obtention d'une électrode de référence selon l'invention met en oeuvre les étapes suivantes :
(i) fourniture d'une cellule électrochimique, comprenant ladite électrode à base du ou desdits matériau(x) organique(s) de type N comme électrode de travail, une contre-électrode ; et un électrolyte à base d'au moins un sel ionique ; et
(ii) réduction de l'électrode de travail de ladite cellule dans des conditions adaptées pour atteindre un plateau de potentiel.

Selon une première variante de réalisation, la cellule électrochimique pour la préparation de l'électrode de référence peut être une cellule électrochimique distincte de la cellule du système de stockage électrochimique dans laquelle l'électrode de référence est destinée à être utilisée.

Selon une autre variante de réalisation, comme illustré dans les exemples qui suivent, l'électrode de référence peut être préparée directement au niveau de la cellule électrochimique du système de stockage électrochimique dans laquelle elle est destinée à être utilisée, l'électrode positive ou négative servant alors de contre-électrode pour la préparation de l'électrode de référence.

Le matériau de la contre-électrode peut être de diverses natures, pour autant qu'il puisse s'oxyder ; il s'agit par exemple d'une électrode à base de de lithium, de sodium, de LiFePO₄ ou de LiMO₂, avec M représentant Co, Ni ou Mn.

Également, tout type de contre-cations peut être mis en oeuvre pour compenser la charge négative dudit matériau organique sous forme partiellement réduite. Il peut s'agir de cations monovalents ou polyvalents, par exemple divalents.

Il peut s'agir par exemple d'un ou plusieurs cations organiques, par exemple choisis parmi des cations de type alkylammonium (RN₄⁺ avec R représentant un groupe alkyle), de type tétraalkyl phosphonium (R₄P⁺, avec R, identiques ou différents, représentant des groupes alkyles), imidazolium, pyrrolinidium, ou encore de cations inorganiques, notamment des cations de métal alcalin ou alcalino-terreux, notamment choisis parmi Li⁺, Na⁺, K⁺, Ca²⁺ ou Mg²⁺.

Les anions associés aux cations, par exemple au lithium, au sein du sel mis en oeuvre peut être de tout type, par exemple il peut s'agir d'anions inorganiques comme par exemple PF₆⁻ , BF₄⁻, ClO₄⁻, F⁻, Cl⁻, Br⁻, I⁻, NO₃⁻ et HSO₄⁻.

Avantageusement, mais de manière non restrictive, le ou lesdits cations sont de même nature que le ou lesdits cations entrant dans la composition de l'électrolyte, et plus particulièrement dans la composition du ou desdits sels de l'électrolyte, de ladite cellule du système de stockage électrochimique dans laquelle ladite électrode de référence est destinée à être mise en oeuvre.

A titre d'exemple, dans le cas où l'électrode de référence selon l'invention est destinée à être mise en oeuvre au niveau d'une batterie au lithium (respectivement, au sodium, potassium, calcium, magnésium), par exemple une batterie lithium-ion (respectivement, sodium-ion, potassium-ion, calcium-ion, magnésium-ion), le contre-cation, pour la compensation des charges négatives du matériau organique sous sa forme partiellement réduite, peut être le lithium.

A titre d'exemple, pour la préparation d'une électrode de référence selon l'invention à base de tétracarboxylate de pérylène (PTCLi₄), la réaction électrochimique à deux électrons, associée à la réduction de deux fonctions carboxylates lithiées du PTCLi₄ avec compensation par des cations Li⁺ (lithiation) peut être schématisée comme suit :

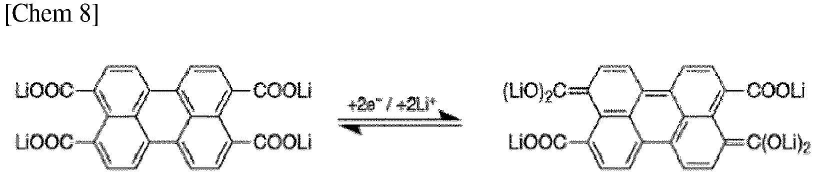

L'électrode de référence peut être préparée en procédant directement à une réduction partielle du matériau organique de type N, au cours de laquelle les charges négatives crées du fait de la réduction partielle du matériau organique de type N sont compensées par des cations, jusqu'à atteindre le plateau de potentiel.

Alternativement, l'électrode de référence peut être préparée en procédant à une réduction partielle du matériau organique de type N, au cours de laquelle les charges positives créées du fait de la réduction du matériau organique de type N, sont compensées par des cations. Il est également possible de réaliser une réduction complète, suivie d'une oxydation partielle, afin d'atteindre le plateau de potentiel.

La charge et, éventuellement, décharge partielle, pour atteindre le plateau de potentiel peut être par exemple réalisée à un régime allant de C/100 à 5C.

Eventuellement, dans le cas où l'électrode de référence est préparée dans une cellule distincte de la cellule du système de stockage électrochimique dans laquelle elle est mise en oeuvre, l'électrode de référence préparée peut être nettoyée préalablement à sa mise en oeuvre au sein de la cellule du système de stockage électrochimique. Par exemple, elle peut être rincée au carbonate de diméthyle, afin d'éliminer les sels résiduels au niveau de la porosité de l'électrode.

Le ou lesdits matériaux organiques de type N, sous leur forme partiellement réduite chargée négativement, avec une compensation par au moins un cation, peuvent représenter de 5 à 95 % massique, en particulier de 30 à 70 % massique et plus particulièrement de 40 à 60 % massique, par rapport à la masse totale de matériau(x) de type N présent(s) dans l'électrode. Comme indiqué précédemment, l'électrode de référence selon l'invention comprend, outre le ou lesdits matériaux organiques de type N sous forme partiellement réduite, un ou plusieurs additifs conducteurs électroniques, en particulier tels que définis précédemment, notamment choisis parmi des fibres de carbone, du noir de carbone, des nanotubes de carbone et leurs mélanges, et éventuellement un ou plusieurs liants, en particulier tels que définis précédemment, en particulier un ou plusieurs liants polymères, notamment choisis parmi les polymères fluorés, par exemple parmi le polytétrafluoroéthylène (PTFE), le polyfluorure de vinylidène (PVDF), les polymères dérivés de carboxyméthylcellulose, les polysaccharides et les latex notamment de type caoutchouc styrène-butadiène.

Le ou lesdits liants peuvent représenter moins de 20 % massique de la masse totale de l'électrode, en particulier moins de 5 % massique, notamment entre 1 et 3 % massique, de la masse totale de l'électrode, exclusion faite de la masse du collecteur de courant.

Le ou lesdits additifs conducteurs électroniques peuvent représenter de 0,5 à 50 % massique, en particulier de 5 à 20 % massique, de la masse totale de l'électrode, exclusion faite de la masse du collecteur de courant.

De préférence, le grammage de l'électrode de référence à base du ou desdits matériaux organiques de type N, défini comme la masse de matériau(x) organique(s) de type N en grammes par unité de surface en cm², est compris entre 0,1 mg/cm² et 50 mg/cm², en particulier entre 1 mg/cm² et 20 mg/cm².

### SYSTEME DE STOCKAGE ELECTROCHIMIQUE

Comme indiqué précédemment, l'électrode à base de matériau(x) organique(s) de type N, sous forme partiellement réduite, telle que décrite précédemment, peut être mise en oeuvre comme électrode de référence au sein d'au moins une cellule d'un système de stockage électrochimique ou générateur électrochimique.

Les systèmes de stockage électrochimique dans lesquels une électrode de référence selon l'invention peut être incorporée, peuvent être divers. Il peut s'agir d'une batterie métal-ion, notamment des batteries au sodium, au lithium, au potassium, au magnésium ; d'une batterie lithium-soufre ou lithium-air.

Il peut encore s'agir d'un supercondensateur, en particulier d'un supercondensateur « standard » ou d'un supercondensateur dit « hybride », notamment d'un supercondensateur hybride au potassium.

Quelle que soit la nature du système de stockage électrochimique, la cellule du système de stockage électrochimique comprend typiquement une électrode positive, une électrode négative et un électrolyte, notamment imprégnant une membrane poreuse séparant lesdites électrodes.

L'électrode de référence selon l'invention est ainsi intégrée en tant que troisième électrode à la cellule du système de stockage électrochimique.

Une cellule d'un système de stockage électrochimique selon l'invention est ainsi un système à trois électrodes, comportant plus particulièrement :
- une électrode positive ;
- une électrode négative ; et
- ladite électrode de référence selon l'invention, en particulier préparée comme décrit précédemment.

La nature des éléments constituant la cellule du système de stockage électrochimique, en particulier des électrodes positive et négative et de l'électrolyte, dépend bien entendu du type de dispositif considéré, suivant qu'il s'agisse d'une batterie métal-ion, d'une batterie lithium-soufre, lithium-air, d'un supercondensateur, etc.

Le ou lesdits matériau(x) actif(s) de l'électrode négative peu(ven)t être notamment choisi(s) parmi du carbone activé, des matériaux carbonés d'intercalation d'un élément alcalin tel que du graphite ; du silicium ; des matériaux de conversion du type MO₂ avec M représentant par exemple Sn (SnO₂), Si (SiO₂), ou du type M₃O₄ avec M représentant par exemple Co (Co₃O₄), Mn (Mn₃O₄) etc., des métaux (Li, Na, K, Mg, Ca) et alliages à base de ces métaux, des oxydes de titane de type Li₄Ti₅O₁₂.

Le ou lesdits matériau(x) actif(s) de l'électrode positive peu(ven)t être notamment choisi(s) parmi du carbone activé, du LiMO₂ ou LiM₂O₄ avec M représentant Mn, Co, Ni ou l'une de leurs combinaisons ; du LiMPO₄ avec M représentant Fe, Mn ou une de leurs combinaisons.

L'exemple qui suit, en référence à la mise en oeuvre d'une électrode de référence selon l'invention au niveau d'une cellule d'une batterie lithium-ion, est ainsi donné uniquement à titre illustratif de l'invention, étant entendu que l'utilisation d'une électrode de référence n'est aucunement limitée à ce mode particulier de mise en oeuvre.

Ainsi, à titre d'exemple de mise en oeuvre, une électrode de référence selon l'invention est introduite au niveau d'une batterie au lithium, en particulier d'une batterie lithium-ion. Une électrode de référence selon l'invention peut être par exemple mise en oeuvre au niveau d'une cellule d'une batterie lithium-ion comportant par ailleurs :
- une électrode positive comprenant un matériau actif positif, en particulier choisi parmi LiFeₓMn_{y}PO₄, avec la somme de x et y égale à 1, par exemple du LiFePO₄ ;
- une électrode négative comprenant un matériau actif négatif, par exemple à base d'oxyde de titane à structure spinelle tel que par exemple l'oxyde de lithium-titane Li₄Ti₅O₁₂ ; et
- un électrolyte comprenant au moins un sel de lithium par exemple du LiPF₆, dans un ou plusieurs solvants organiques, par exemple choisi parmi des solvants carbonates, tels que du carbonate d'éthylène (EC), du carbonate de diéthyle (DEC) et/ou du carbonate de diméthyle (DMC).

Il est entendu que les différents éléments sont assemblés au sein de la cellule du système de stockage électrochimique, par exemple de la batterie ou du supercondensateur, de sorte, d'une part, à permettre une utilisation efficace de l'électrode de référence, par exemple à des fins de connaître les potentiels des électrodes positive et négative et, d'autre part, de sorte que la présence de cette troisième électrode n'interfère pas négativement au niveau du fonctionnement de la cellule dudit système de stockage électrochimique.

En particulier, l'électrode de référence peut être utilisée lorsque la cellule dudit système de stockage électrochimique est soumise à un cyclage pour des courants allant de C/2 à 100C, en particulier de C/2 à 5C, à des températures allant de -40°C à 100°C.

D'une manière générale, les différentes électrodes de la cellule du système de stockage électrochimique sont séparées les unes des autres par une membrane poreuse, dite encore « séparateur », imprégnée par l'électrolyte.

De tels séparateurs poreux peuvent être par exemple en polyéthylène, en polypropylène. La cellule du système de stockage électrochimique selon l'invention peut présenter avantageusement une configuration de couches superposées. Autrement dit, l'assemblage de la cellule peut être réalisé par empilement des différents éléments sous la forme de couches. Chacune des électrodes d'une cellule du système de stockage électrochimique selon l'invention peut se présenter sous la forme d'une couche du matériau d'électrode, déposée sur au moins l'une des faces ou sur les deux faces d'un collecteur de courant se présentant sous la forme d'un film mince, par exemple sous la forme d'un feuillard métallique.

Selon une variante de réalisation, dans le cas d'une architecture de la cellule du système de stockage électrochimique sous la forme d'un empilement des différents éléments, l'électrode de référence peut être positionnée entre les électrodes positive et négative.

La Figure 1 représente, de manière schématique, en coupe transversale, un exemple d'assemblage 100 des différents éléments, intégrant une électrode de référence selon l'invention, au sein d'une cellule d'un système de stockage électrochimique, à l'image par exemple de la cellule d'une batterie métal-ion.

Comme représenté sur cette figure, dans une variante de réalisation, une cellule d'un système de stockage électrochimique selon l'invention, par exemple d'une batterie métal-ion, peut comporter l'assemblage 100 des différents éléments suivants, dans cet ordre d'empilement :
- une électrode positive 22, en particulier formée d'une couche de matériau actif 220 sur un collecteur de courant 221, par exemple en aluminium ;
- un séparateur poreux 24, par exemple en polypropylène, destiné à être imprégné par l'électrolyte ;
- ladite électrode de référence 21, en particulier préparée comme décrit précédemment, formée d'une couche 211 du matériau d'électrode à base du ou desdits matériaux organiques de type N sous une forme partiellement réduite, au niveau d'un collecteur de courant 212, par exemple en aluminium ;
- un séparateur poreux 24, par exemple en polypropylène, destiné à être imprégné par l'électrolyte ; et
- une électrode négative 23, en particulier formée d'une couche de matériau actif 231 sur un collecteur de courant 232, par exemple en aluminium.

Au sein de la cellule du système électrochimique, l'assemblage est trempé par un électrolyte comportant au moins un sel de métal alcalin ou alcalino-terreux, par exemple un sel de lithium dans le cas d'une batterie au lithium, dans un ou plusieurs solvants aqueux ou organiques.

Les séparateurs poreux assurent une isolation électronique entre les électrodes, tout en permettant un passage facile des ions de l'électrolyte.

L'électrode de référence 21, intercalée au sein de l'assemblage entre les électrodes positive 22 et négative 23, présente avantageusement une surface dans un plan orthogonal à la direction d'empilement des différents éléments (électrodes et séparateurs), réduite comparativement aux surfaces des électrodes positive et négative dans ce même plan. De préférence, l'aire projetée de l'électrode de référence dans un plan orthogonal à la direction d'empilement, ne dépasse pas 10 %, en particulier 5 %, de l'aire projetée dans ce même plan des électrodes positive et négative.

L'invention n'est pas limitée à l'agencement représenté en figure 1. D'autres assemblages peuvent être considérés, pour autant qu'ils permettent d'assurer à la fois le fonctionnement de la cellule du système de stockage électrochimique et l'utilisation de l'électrode de référence. Des exemples de configuration de cellules à trois électrodes sont par exemple décrit dans le document US 9,379,418.

Une cellule d'un système de stockage électrochimique selon l'invention peut être conditionnée dans un format prismatique ou cylindrique. Dans le format prismatique, l'assemblage est de préférence conditionné dans un emballage capable d'empêcher une contamination par l'air ou l'eau de la cellule.

Dans un mode de réalisation particulier, une cellule d'un système de stockage électrochimique selon l'invention peut être conditionnée dans un format prismatique, et en particulier sous la forme d'une « pouch cell » comme illustré dans les exemples. Une telle cellule « pouch cell » présente notamment un emballage flexible en aluminium-plastique. Un système de stockage électrochimique, par exemple de type batterie ou supercondensateur selon l'invention, peut comprendre au moins une cellule selon l'invention intégrant une électrode de référence.

De manière avantageuse, la différence de potentiel entre l'électrode positive (respectivement, l'électrode négative) et l'électrode de référence permet de mesurer et de surveiller le potentiel de l'électrode positive (respectivement, l'électrode négative) par rapport à une valeur connue de potentiel, pendant le fonctionnement du supercondensateur. Les branchements et circuits électriques externes à l'assemblage ne sont pas représentés sur les figures.

Le circuit externe entre l'électrode positive (respectivement, l'électrode négative) et l'électrode de référence peut être connecté électriquement à un moniteur de tension pour permettre d'indiquer ou d'enregistrer le potentiel de l'électrode positive (respectivement, l'électrode négative).

Les potentiels des électrodes positive et négative peuvent être surveillés simultanément ou non, de manière continue, périodique, aléatoire ou à des moments prédéterminés, au cours du fonctionnement du système de stockage électrochimique.

Il est entendu que l'ensemble des caractéristiques décrites pour l'électrode de référence et pour les différents éléments d'une cellule du système de stockage électrochimique s'applique à la cellule du système de stockage électrochimique, au système de stockage électrochimique et aux utilisations revendiqués selon l'invention.

L'invention va maintenant être décrite au moyen des figures et exemples suivants, donnés bien entendu à titre illustratif et non limitatif de l'invention.

### EXEMPLE 1

### Préparation d'une électrode de référence selon l'invention

Une électrode de référence selon l'invention, à base de tétracarboxylate de pérylène (PTCLi₄), a été préparée directement au niveau de la cellule de batterie dans laquelle elle est destinée à être mise en oeuvre.

Le PTCLi₄ est un matériau de type N, dont la réaction électrochimique associée au passage réversible de l'état oxydée dudit matériau à l'état réduit, chargé négativement, présente un potentiel électrochimique constant.

La réaction électrochimique rédox, associée à la réduction des fonctions carboxylates lithiées, du PTCLi₄, avec compensation par des cations Li⁺, peut être schématisée comme suit :

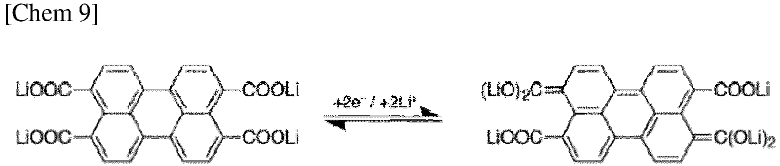

La figure 2 (publication [3]) représente le profil de cyclage galvanostatique lors d'un cycle de charge/décharge à un régime de C/10 d'une électrode à base de PTCLi₄ (électrode avec PVDF comme liant et du carbone de type Super P^{™} comme additif conducteur) dans le cas d'une demi-pile au lithium. Le profil de charge/décharge confirme l'existence d'un plateau de potentiel à environ 1,1 V *versus* Li/Li⁺.

L'électrode à base de PTCLi₄ (matériau organique de type N) est composée d'un mélange de 95% de PTCLi₄ ; 0,5% de nanotubes de carbone et 4,5 % de liant carboxyméthylcellulose (CMC), déposé sur un collecteur de courant en aluminium.

L'électrode à base de PTCLi₄ est introduite au niveau d'une cellule de batterie lithium-ion La réalisation du montage est effectuée au format « pouch cell », à partir des électrodes suivantes :
- l'électrode à base de PTCLi₄, destinée à former ultérieurement une électrode de référence ;
- une électrode positive, composée d'un mélange de 90,5 % de LiFePO₄ ; 4,5 % de carbone Super P et 5 % de liant polyfluorure de vinylidène (PVDF), déposé sur un collecteur de courant en aluminium ;
- une électrode négative, composée d'un mélange de 90 % de Li₄Ti₅O₁₂ ; 5 % de carbone Super P et 1 % de polymère CMC et 4 % de latex Styrofan^{®} LD 417, déposé sur un collecteur de courant en aluminium.

Les électrodes sont séparées par deux séparateurs Celgard ^{®}, et l'ensemble est imprégné d'un électrolyte à base de carbonate d'éthylène (EC)/carbonate de diméthyle (DMC) et du sel LiPF₆.

La figure 3 représente schématiquement la cellule au format pouch-cell ainsi obtenue.

### Activation de l'électrode de référence

Afin de réaliser une lithiation (réduction avec compensation des charges anioniques par des cations Li⁺) partielle du PTCLi₄, l'électrode est connectée en tant qu'électrode de travail et l'électrode de LiFePO₄ en tant que contre-électrode.

Une réduction partielle du matériau de type N est réalisée à un régime de C/100. Le taux de lithiation est de 25 %.

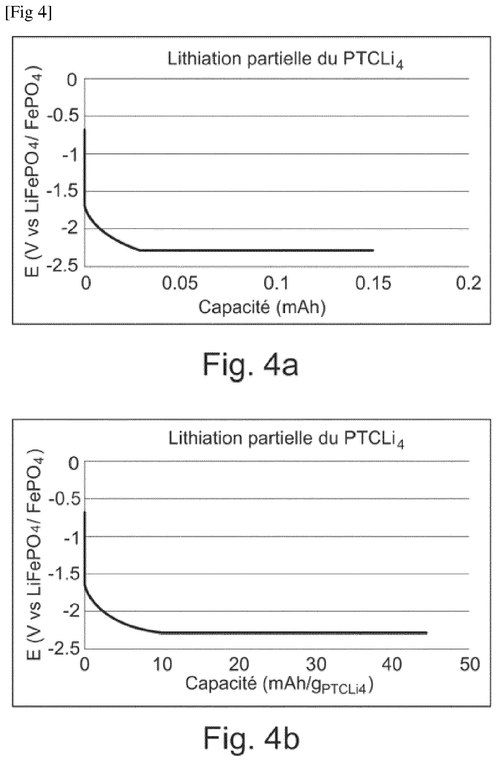

La figure 4 représente l'évolution du potentiel électrochimique E en fonction de la capacité spécifique massique.

### EXEMPLE 2

### Utilisation de l'électrode de référence pour réaliser le suivi des potentiels des électrodes positive et négative

La cellule préparée en exemple 1, incorporant l'électrode de référence à base de PTCLi₄, est ensuite connectée en configuration « trois électrodes », avec l'électrode positive en tant qu'électrode de travail, l'électrode négative en tant que contre-électrode et l'électrode de PTCLi₄, en tant qu'électrode de référence.

La cellule est chargée à un régime de C/10 et il est possible de suivre le potentiel des électrodes positive et négative indépendamment, par rapport au potentiel de l'électrode de référence.

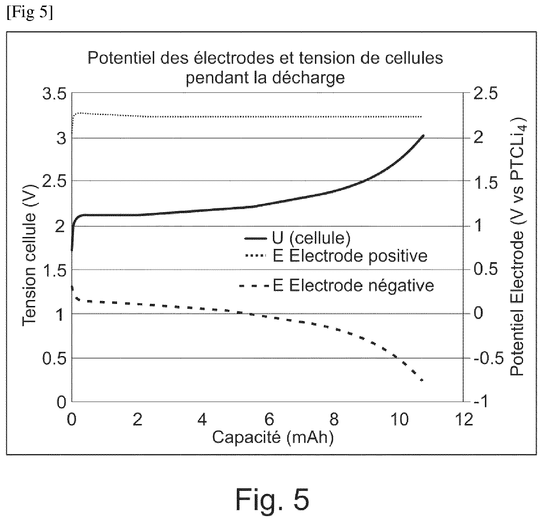

La figure 5 représente la tension de cellule et les potentiels des électrodes négative et positive pendant la charge.

### Références

[1] Cengiz et al., J. Electrochem. Soc. 2021 ;
[2] Poizot et al., Chem. Rev. https://dx.doi.org/10.1021/acs.chemrev.9b00482
[3] Iodarche et al., Adv. Sustainable Syst. 2017, 1600032.

## Revendications

1. Utilisation, à titre d'électrode de référence dans une cellule d'un système de stockage électrochimique, d'une électrode à base d'un ou plusieurs matériaux organiques électro-actifs de type N, dont la réaction rédox associée présente un potentiel électrochimique constant ; le ou lesdits matériaux organiques de type N étant présents sous une forme partiellement réduite chargée négativement, avec une compensation de charge par au moins un cation.

2. Utilisation selon la revendication précédente, dans laquelle le ou lesdits matériaux organiques de type N sont choisis parmi des composés, en particulier des molécules, oligomères ou polymères, porteurs de fonctions rédox choisies parmi :
- des fonctions azoïques conjuguées (-N=N-) tel que l'azobenzène ou l'un de ses dérivés ;
- des fonctions disulfures (-S-S-) tels que les diphényldisulfures, le tétrathionapthtalène, le poly(2,5-dimercapto-1,3,4-thiadiazole), le poly(5,8-dihydro-1H,4H-2,3,6,7-tétrathia-anthracène) ; et
- des fonctions carbonyles conjuguées, en particulier contenues au sein de structures quinonoïdes, comme par exemple l'anthraquinone ; de structures anhydrides comme par exemple l'anhydride pyromellitique, de structures dimides comme par exemple le dimide du pérylène ; ou de structures carboxylates comme par exemple le tétracarboxylate de pérylène.

3. Utilisation selon l'une quelconque des revendications précédentes, dans laquelle le ou lesdits matériaux organiques de type N sont choisis parmi des composés, notamment moléculaires, oligomères ou polymères, comprenant un ou plusieurs groupes carboxylates, en particulier carboxylates lithiés, tels que le téréphtalate de dilithium, le carboxylate de naphtalène lithié, le carboxylate de pérylène lithié ; ou encore des oligomères ou polymères fonctionnalisés par des groupements carboxylates, tel que le polythiophène téréphtalate.

4. Utilisation selon l'une quelconque des revendications précédentes, dans laquelle le matériau organique de type N est le tétracarboxylate de pérylène lithié, noté PTCLi₄.

5. Utilisation selon l'une quelconque des revendications précédentes, dans laquelle ladite électrode de référence comprend, outre le ou lesdits matériau(x) organique(s) de type N sous forme partiellement réduite, un ou plusieurs additifs conducteurs électroniques, en particulier choisis parmi des fibres de carbone, du noir de carbone, des nanotubes de carbone et leurs mélanges, et éventuellement un ou plusieurs liants, en particulier un ou plusieurs liants polymères, notamment choisis parmi les polymères fluorés, par exemple parmi le polytétrafluoroéthylène (PTFE), le polyfluorure de vinylidène (PVDF), les polymères dérivés de carboxyméthylcellulose, les polysaccharides et les latex notamment de type caoutchouc styrène-butadiène.

6. Utilisation selon l'une quelconque des revendications précédentes, dans laquelle ladite électrode de référence est préparée, préalablement à son utilisation dans ladite cellule, à partir d'une électrode à base du ou desdits matériaux organiques de type N, par réduction partielle du ou desdits matériaux organiques de type N avec une compensation des charges négatives crées lors de l'oxydation par insertion de cations, permettant d'obtenir le potentiel électrochimique constant.

7. Utilisation selon la revendication précédente, dans laquelle ladite électrode de référence est obtenue *via* les étapes suivantes :
(i) fourniture d'une cellule électrochimique, comprenant ladite électrode à base du ou desdits matériau(x) organique(s) de type N comme électrode de travail, une contre-électrode ; et un électrolyte à base d'au moins un sel ionique ; et
(ii) réduction de l'électrode de travail de ladite cellule dans des conditions adaptées pour atteindre un plateau de potentiel.

8. Utilisation selon l'une quelconque des revendications précédentes, dans laquelle la charge négative du ou desdits matériaux organiques de type N sous forme partiellement réduite est compensée par un ou plusieurs cations monovalents ou polyvalents, en particulier choisis parmi des cations organiques, tels que des cations de type alkylammonium, tétraalkyl phosphonium, imidazolium, pyrrolinidium, et des cations inorganiques, tels que des cations de métal alcalin ou alcalino-terreux, notamment choisis parmi Li⁺, Na⁺, K⁺, Ca²⁺ ou Mg²⁺ ; de préférence le ou lesdits cations étant de même nature que le ou lesdits cations entrant dans la composition du ou desdits sels de l'électrolyte de ladite cellule du système de stockage électrochimique.

9. Utilisation selon l'une quelconque des revendications précédentes, dans laquelle le ou lesdits matériaux organiques de type N sous leur forme partiellement réduite chargée négativement représentent de 5 à 95 % massique, en particulier de 30 à 70 % massique et plus particulièrement de 40 à 60 % massique, par rapport à la masse totale de matériau(x) de type N présent(s) dans l'électrode.

10. Utilisation selon l'une quelconque des revendications précédentes, dans une cellule d'une batterie métal-ion, notamment une batterie sodium-ion, lithium-ion, potassium-ion, magnésium-ion ; une batterie lithium-soufre ou lithium-air ; ou d'un supercondensateur, en particulier d'un supercondensateur hybride au potassium.

11. Utilisation selon l'une quelconque des revendications précédentes, pour connaître les potentiels d'au moins l'une des électrodes positive et négative, de préférence de chacune des électrodes positive et négative de ladite cellule du système de stockage électrochimique, en particulier pour suivre l'évolution des potentiels d'au moins l'une des électrodes positive et négative, au cours du fonctionnement dudit système.

12. Cellule d'un système de stockage électrochimique comportant trois électrodes :
- une électrode positive ;
- une électrode négative ; et
- une électrode de référence à base d'un ou plusieurs matériaux organiques électro-actifs de type N, dont la réaction rédox associée présente un potentiel électrochimique constant ; le ou lesdits matériaux organiques de type N étant présents sous une forme partiellement réduite chargée négativement, avec une compensation de charge par au moins un cation, ladite électrode de référence étant en particulier telle que définie dans l'une quelconque des revendications 2 à 9.

13. Système de stockage électrochimique, comprenant au moins une cellule telle que définie en revendication 12, ledit système étant notamment choisi parmi les batteries métal-ion, notamment les batteries sodium-ion, lithium-ion, potassium-ion, magnésium-ion ; les batteries lithium-soufre ou lithium-air ; les supercondensateurs, en particulier les supercondensateurs hybrides au potassium.
